# EUROPEAN PATENT APPLICATION

(11) **EP 2 012 247 A1**
(43) Date of publication of application: **07.01.2009**
(21) Application number: 07111818.6
(22) Date of filing: 05.07.2007
(51) Int. Cl.: G06F 21/00, G06F 21/24

(54) **Method for transmitting media data used in web sites**

(71) Applicant: Fraunhofer-Gesellschaft zur Förderung der angewandten Forschung e.V., 80686 München (DE)
(72) Inventor: Steinebach, Martin, 64859 Eppertshausen (DE); Liu, Huajian, 64283 Darmstadt (DE); Croce-Ferri, Lucilla, 64342 Seeheim-Jugenheim (DE); Zmudzinski, Sascha, 60316 Frankfurt (DE)
(74) Representative: von Kreisler Selting Werner

(57) **Abstract**

The method for transmitting media data used in web sites and provided with a digital watermark comprises the steps of importing a web site containing media data into a web server, automatically preparing the media data of the web site for individual water marking, determining that a user wishes to download media data from the web site, providing user information data specific for and associated to the user, generating a digital watermark from the user information data, creating a version of the media data to be downloaded wherein the version is marked with the digital watermark, and transmitting the media data version marked with the digital watermark by the web server.

## Description

The present invention relates to the downloading of media data used in web sites and automatically provided with individual digital watermarking.

Today many companies complain about theft and misuse of images taken from their internet presentation. These images are downloaded from web sites and used by third parties e.g. for promoting their products. While copyright laws protect these images, it is often hard to localize illegal usage in the World Wide Web and to trace back images to the person who downloaded the image in the first place. This can be of special importance as cases can occur where one person downloads images from web sites and, thereafter sells these images to other persons who then use these stolen images for their internet presentations. Here it is of great interest to identify the person who downloaded the images in the first place. The present invention relates to the provision of marked versions of media data such as image video audio data downloaded from a web page.

### State of the art

Digital watermarking for image data or other media data is a well-known and widely applied technology. Presently used technologies include copyright protection, integrity verification and customer tracing. The watermark information is either embedded before content is made available when one watermark is to be present in each copy or during the distribution process when individual watermarks are necessary. Known alternatives to the latter approach are the integration of watermarks into content management systems identifying users retrieving content from the system (Steinebach, Dittmann, Secure production of digital media, In: M. Hemmje, C. Nideree, T. Risse (Eds.): From Integrated Publication and Information Systems to Information and Knowledge Environments: Essays Dedicated to Erich J. Neuhold on the Occasion of His 65th Birthday. LNCS 3379, ISBN: 3540245510, Heidelberg, Springer-Verlag, pp. 79-86, 2005) or transaction watermarks embedding customer identification codes during the sales and download process (Steinebach, Dittmann, Neubauer; Anforderungen an digitale Transkationswasserzeichen für den Einsatz im e-Commerce, von e-Learning bis e-Payment - Das Internet als sicherer Marktplatz, Klaus P. Jantke, Wolfgang S. Wittig, Jörg Herrmann (Hrsg.), Tagungsband LIT '02, 26./27. September 2002, Leipzig, Akademische Verlagsgesellschaft Aka GmbH, Berlin, S. 209-217, ISBN 3-89838-033-5, 2002 and Petrovic, Copyright protection based on transaction watermarks, Tellsiks 2003, pp. 509-518, October 2003).

### Object

It is an object of the present invention to improve the possibility of tracing illegal copying of media data downloaded from web sites.

### Solution

The present invention provides a method for transmitting media data used in web sites and provided with a digital watermark, comprising the steps of
- importing a web site containing media data into a web server,
- automatically preparing the media data of the web site for individual water marking,
- determining that a user wishes to download media data from the web site,
- providing user information data specific for and associated to the user,
- generating a digital watermark from the user information data,
- creating a version of the media data to be downloaded wherein the version is marked with the digital watermark, and
- transmitting the media data version marked with the digital watermark by the web server.

According to the present invention an individual digital watermark is generated for associating it to the user or visitor of a web page who wants to download media data used in the web page. This makes it possible to identify the source of distribution of the downloaded media data based on the digital watermark identifying the user who had downloaded the media data and had illegally distributed them.

According to the invention prior, to a potential downloading of the media data of a web site, the content (media data) are (automatically) prepared for individual watermarking. When the media data are to be downloaded, the prepared version is used by the web server to create the marked version (version with individual watermark) very fast and easily. The preparation of the web sites for individual watermarking is performed automatically by the web server irrespective of whether or not the web sites will be downloaded. This guarantees the fast creation of the watermarked version which is transmitted to the user upon request.

The information data specifying the user may comprise the IP address and/or login name of the user and/or a time during which the user accessed the media data and/or downloaded the media data and/or visited the web site.

The present invention also provides a method for embedding a digital watermark in media data used in a web site, comprising the steps of
- determining that a user wishes to download media data from a web site,
- providing user information data specific for and associated to the user,
- generating a digital watermark from the user information data, and
- creating a version of the media data to be downloaded wherein the version is marked with the digital watermark.

In a preferred embodiment of the present invention, the user information data are stored and the user information data from which the digital watermark is created comprises reference data referring to the stored user information data. Collecting the user information data is preferred in particular when the user's IP address is a dynamic IP address.

In order to optimise the process for embedding a digital watermark into media data, in one aspect of the present invention it is provided to identify whether the media data to be downloaded are image, video, audio or text data or a mixture of at least two types of these data, depending on the type of media data to be downloaded, to select a digital watermark algorithm for creating a version of the media data marked with the digital watermark, and to use the selected algorithm for creating the media data version.

### Examples

The present invention will be described in further detail referring to a preferred embodiment as well as the drawings in which:
- Fig. 1: illustrates the individual steps for digitally watermarking media data to be downloaded by a user or visitor of a web site and
- Fig. 2: illustrates the optimisation of the embedment of a digital watermark in media data of different types.

In the embodiment disclosed hereinbelow the invention is described for individually marking images used in web sites. However, instead of images the present invention can also be used for individually marking video or audio data or text documents.

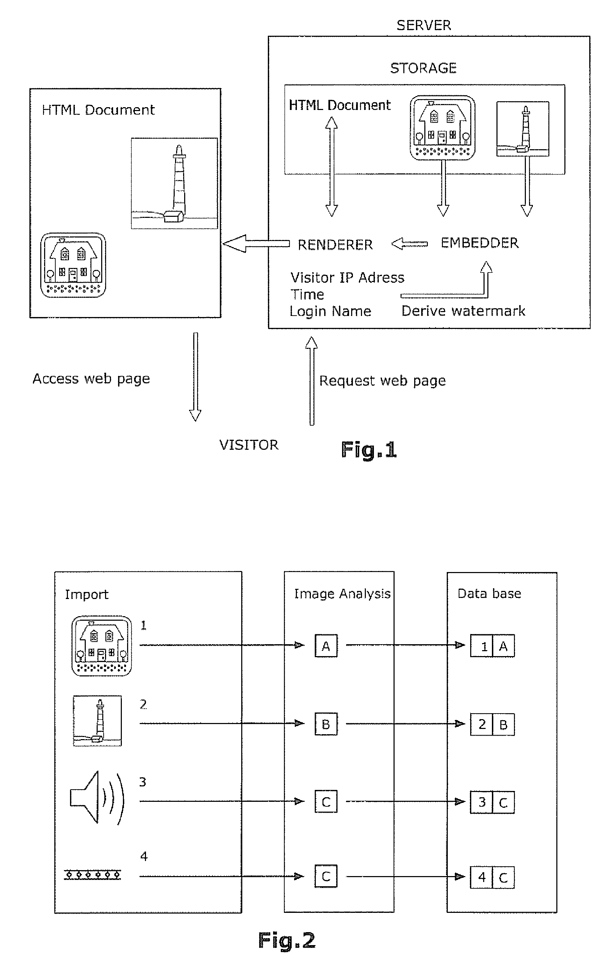

According to Fig. 1, the preferred embodiment resides in using digital watermarking to individually mark images used within a HTML web site. In this embodiment, as illustrated in Fig. 1, the method comprises the following steps:
1. A visitor or user V wants to view a certain web page P.
2. The web server S responsible for displaying P retrieves the contents for P from a content management system.
3. At this time, P comprises a HTML file with text and references to included images as well as a set of corresponding images.
4. S identifies V by e,g. its IP address and creates a watermark message M comprising e,g. IP address and current time.
5. Then a watermarking algorithm within S is used to embed M into each image belonging to P.
6. The complete and individually watermarked set of images is used to create P', which is a individually marked version of P.
7. V access P' and thereby downloads the individually marked images. Should V now use the images of P' in some illegal way, e.g. for illustrating its own web sites or sell the images to third parties, this can be detected and proven with the help of the embedded watermark M.

As an alternative, a data base can be integrated within the server where the IP address, time as well as other information is stored and only a reference to the entry can be embedded as a watermark reducing the amount of embedded information and allowing adding collected information like login data at a later time. To be able to later proof the correctness of findings, the data base can also be used to store a cryptographic hash of P' together with the data,

### Technology requirements

To individually mark the accessed images, one or more image watermarking algorithms may be required. Reasons to use more than one algorithm can include:
- algorithm dependence on image type, like bitmap, jpeg or gif file
- algorithm dependence on image size, as small logos as well as full size high resolution images may be found within a web page
- algorithm dependence on image content, including number of colors or amount of textures within an image

To achieve the best watermarking quality, a server should include an analysis phase selecting the best suited watermarking algorithm when content is placed within the web severs' content management system. After analysing the image, the best suited algorithm is assigned to the image and the assignment is stored within a data base which is addressed by the web server when the content needs to be marked. This process is illustrated in Fig. 2.

Another important aspect of the embedding process is the requirement of high speed. To enable an extremely short embedding time in order to prevent delays when accessing web pages, container technology can be applied such as the one introduced in "Steinebach, Zmudzinski, Fan; "The digital watermarking container: Secure and efficient embedding " ACM Multimedia and Security Workshop, 20.-21. September 2004, Magdeburg, Proceedings of the Multimedia and Security Workshop 2004". This requires an additional process after image analysis and algorithm assignment where the images are converted to a container format. These containers are then used to create individually marked copies of the images at a very high speed. In case that audio data will have to be provided with an embedded digital watermark, a technology can be used such as disclosed in "Jir Fridrich, Miroslav Goljan; Robust Hash Functions for Digital Watermarking, International Symposium on Information Technology (ITCC 2000), 27-29 March 2000, Las Vegas, NV, USA, IEEE Computer Society, ISBN 0-7695-0540-6" or "Steinebach, Zmudzinski, Neichtadt; Robust-audio-hash synchronized audio watermarking; 4th International Workshop on Security in Information Systems - (WOSIS 2006) Paphos, Cyprus, Eduardo Fernández-Medina and Mariemma I. Yague (Eds.), pp. 58-66, 2006)".

## Claims

1. Server-based method for transmitting media data used in web sites and provided with a digital watermark, comprising the steps of
- importing a web site containing media data into a web server,
- automatically preparing the media data of the web site for individual water marking,
- determining that a user wishes to download media data from the web site,
- providing user information data specific for and associated to the user,
- generating a digital watermark from the user information data,
- creating a version of the media data to be downloaded wherein the version is marked with the digital watermark, and
- transmitting the media data version marked with the digital watermark by the web server.

2. Server-based method according to claim 1, wherein the user information data comprises an IP address and/or login name of the user.

3. Server-based method according to claim 2, wherein the user information data further comprises a time during which the user accesses to the media data and/or wishes to download the media data and/or visits the web site.

4. Server-based method according to any one of claims 1 to 3, wherein user information data are stored and wherein the user information data from which the digital watermark is created comprises reference data referring to the stored user information data.

5. Server-based method according to any one of claims 1 to 4, further comprising identifying whether the media data to be downloaded are image, video, audio or text data or a mixture of at least two types of these data, depending on the type of media data to be downloaded, selecting a digital watermark algorithm for creating a version of the media data marked with the digital watermark, and using the selected algorithm for creating the media data version.

6. Server-based method for embedding a digital watermark in media data used in a web site, comprising the steps of
- importing a web site containing media data into a web server,
- automatically preparing the media data of the web site for individual water marking,
- determining that a user wishes to download media data from the web site,
- providing user information data specific for and associated to the user,
- generating a digital watermark from the user information data, and
- creating a version of the media data to be downloaded wherein the version is marked with the digital watermark by the web server.
